Europäisches Patentamt

European Patent Office

Office européen des brevets

(11) Veröffentlichungsnummer: **0 424 732 A1**

(12) **EUROPÄISCHE PATENTANMELDUNG**

(21) Anmeldenummer: 90119441.5

(22) Anmeldetag: 10.10.90

(51) Int. Cl.5: **H01M 8/02, H01M 8/24**

(30) Priorität: 27.10.89 CH 3877/89

(43) Veröffentlichungstag der Anmeldung:
**02.05.91 Patentblatt 91/18**

(84) Benannte Vertragsstaaten:
**CH DE FR GB LI NL SE**

(71) Anmelder: **ASEA BROWN BOVERI AG**

**CH-5401 Baden(CH)**

(72) Erfinder: **Nazmy, Mohamed, Dr.**
**Zelglistrasse 30**
**CH-5442 Fislisbach(CH)**

(54) Stromübertragungselemente für stapelförmig angeordnete Hochtemperatur-Brennstoffzellen und Verfahren zu deren Herstellung.

㊗ Stromübertragungselemente zur Stromleitung zwischen benachbarten ebenen, stapelförmig angeordneten Hochtemperatur-Brennstoffzellen mit Feststoffelektrolyt (1) bestehend aus einem die geometrische Form bestimmenden Träger (7; 10) aus einer oxyddispersionsgehärteten Nickel- oder Nickel/Chrom-Legierung mit bis 2 Gew.-% $ThO_2$ als Dispersoid, einer elektrisch leitfähigen $Cr_2O_3$-Schicht (8) und einer an den Kontakt/Berührungs-Flächen auf letzterer aufliegenden Edelmetall-Oberflächenschicht (9; 12). Varianten mit zusammenhängender (13; 14) oder poröser (9; 12) Edelmetall-Oberflächenschicht aus Au, einem Pt-Metall oder Legierungen. Trennplatte (4) bestehend aus einer oxyddispersionsgehärteten Nickel/Chrom-Legierung mit Nickelplattierung (5) auf der Brennstoffseite und Edelmetallplattierung (6) auf der Sauerstoffseite.

Fig. 1

Fig. 2

EP 0 424 732 A1

# STROMÜBERTRAGUNGSELEMENTE FÜR STAPELFÖRMIG ANGEORDNETE HOCHTEMPERATUR-BRENNSTOFFZELLEN UND VERFAHREN ZU DEREN HERSTELLUNG

## Technisches Gebiet

Hochtemperatur-Brennstoffzellen zur Umwandlung von chemischer Energie in elektrische Energie. Die elektrochemische Energieumwandlung und die hierzu benötigten Vorrichtungen gewinnen dank ihres guten Wirkungsgrades gegenüber anderen Umwandlungsarten an Bedeutung.

Die Erfindung bezieht sich auf die Weiterentwicklung der elektrochemischen Hochtemperatur-Zellen unter Verwendung von keramischen Feststoffelektrolyten als Ionenleiter, wobei die Zellen weitgehend unabhängig vom verwendeten Brennstoff sein sollen und eine raumsparende Anordnung gewähren sollen.

Im engeren Sinne betrifft sie Stromübertragungselemente zur Stromleitung zwischen benachbarten flachen, ebenen, stapelförmig angeordneten keramischen Hochtemperatur-Brennstoffzellen mit Feststoffelektrolyt auf der Basis von dotiertem, stabilisertem Zirkonoxyd, wobei jeweils die Sauerstoffelektrode der einen Brennstoffzelle mit der Brennstoffelektrode der nächstfolgenden Brennstoffzelle elektrisch leitend verbunden und der zwischen den Elektroden liegende Zwischenraum durch eine gasdichte, elektrisch leitende Trennplatte in zwei, die unterschiedlichen gasförmigen Medien Brennstoff ($CH_4$) und Sauerstoffträger ($O_2$) führenden Räume unterteilt ist.

Ferner betrifft die Erfindung ein Verfahren zur Herstellung der Stromübertragungselemente.

## Stand der Technik

Hochtemperatur-Brennstoffzellen mit keramischem Feststoffelektrolyten sind aus zahlreichen Veröffentlichungen bekannt. Die eigentlichen Elemente für derartige Zellen können die verschiedensten Formen und Abmessungen aufweisen. Um die ohmschen Spannungsverluste klein zu halten, wird allenthalben versucht, die Dicke der Elektrolytschicht möglichst niedrig zu halten. Form und Abmessungen der Elemente richten sich zudem nach der Forderung der Möglichkeit der elektrischen Serieschaltung einer Vielzahl von Zellen, um auf die nötige Klemmenspannung zu kommen und die Ströme vergleichsweise niedrig zu halten.

Im Falle einer stapelförmigen Anordnung einer Vielzahl von plattenförmigen ebenen Brennstoffzellen ähnlich dem Filterpresse-Prinzip muss der Strom senkrecht zur Plattenebene von der Sauerstoffelektrode der einen Zelle zur Brennstoffelektrode der nächstfolgenden Zelle geleitet werden. Als wesentliche Bauelemente sind für diese Funktion elektrische Verbindungsglieder zu den Elektroden (Stromkollektoren) und Trennplatten (Bipolarplatten) erforderlich.

Die bisher bekannten Bauelemente befriedigen vielfach bezüglich der verwendeten Werkstoffe, der Konstruktion und Fabrikation sowie dem Langzeitverhalten den modernen Anforderungen nicht.

Die bekannten, für Brennstoffzellen verwendeten Grundelemente zeichnen sich meistens durch eine vergleichsweise komplizierte Geometrie aus, die den Bau von kompakten, raumsparenden Anlagen erschwert. Insbesondere fehlt eine für eine optimale Serieschaltung der Einzelzellen brauchbare Konfiguration, die sich mit einfachen Fabrikationsmitteln realisieren lässt.

Es besteht daher ein grosses Bedürfnis nach Weiterentwicklung, Vereinfachung und Rationalisierung des Aufbaus und der Herstellung von stromführenden Grund-Bauelementen und deren optimale gegenseitige Anordnung basierend auf keramischen Hochtemperatur-Brennstoffzellen.

Zum Stand der Technik werden die nachfolgenden Druckschriften genannt: - O.Antonsen, W.Baukal und W.Fischer, "Hochtemperatur-Brennstoffbatterie mit keramischem Elektrolyten", Brown Boveri Mitteilungen Januar/Februar 1966, Seiten 21 - 30,
- US-A-4 692 274
- US-A-4 395 468
- W.J.Dollard und W.G.Parker, "An overview of the Westinghouse Electric Corporation solid oxide fuel cell program", Extended Abstracts, Fuel Cell Technology and Applaications, International Seminar, Den Haag, Niederlande, 26. bis 29. Oktober 1987,
- F.J.Rohr, High-Temperature Fuel Cells, Solid Electrolytes, 1978 by Academic Press, Inc., Seite 431 ff.
- D.C.Fee et al., Monolithic fuel Cell Development, Argonne National Laboratory, Paper presented at the 1986 Fuel Cell Seminar, Oct. 26-29, 1986 Tucson, AZ, U.S. Department of Energy, The University of Chicago.

## Darstellung der Erfindung

Der Erfindung liegt die Aufgabe zugrunde, Stromübertragungselemente zur Stromleitung zwischen benachbarten ebenen, stapelförmig angeordneten keramischen Brennstoffzellen sowie ein Verfahren zu deren Herstellung anzugeben, wobei einerseits ein guter elektrischer Kontakt sowohl zu den Elektroden der Brennstoffzelle wie zu den übrigen Bauteilen bei Temperaturen bis zu 900 °C gewährleistet werden soll und andererseits eine hohe metallische elektrische Leitfähigkeit erzielt werden soll. Die Elemente sollen sowohl in reduzierender, neutraler wie in oxydierender Atmosphäre ohne nachteilige Veränderungen durch Materialwanderungen wie Diffusions- oder andere Migrationsvorgänge oder Materialverluste durch Abdampfen etc. eingesetzt werden können und eine hohe Langzeitstabilität aufweisen. Die Elemente sollen kostengünstig, reproduzierbar und auswechselbar hergestellt werden können.

Diese Aufgabe wird dadurch gelöst, dass die eingangs erwähnten Stromübertragungselemente in derjenigen Form und Ausführung vorliegen, dass eine aus einer oxyddispersionsgehärteten Nickel/Chrom-Legierung bestehende, auf der Brennstoffseite eine Nickelplattierung und auf der Sauerstoffseite eine Edelmetallplattierung tragende Trennplatte vorgesehen ist, dass ferner sowohl auf der Brennstoffseite wie auf der Sauerstoffseite Stromkollektoren vorgesehen sind, wobei jeder Stromkollektor aus einem die geometrische Form bestimmenden Träger aus einer elektrisch leitenden oxyddispersionsgehärteten Nickel- oder Nickel/Chrom-Legierung mit einem mindestens in den Oberflächenzonen hohen Cr-Gehalt, wobei als Dispersoid $ThO_2$ in einem Gehalt von bis 2 Gew.-% vorhanden ist, ferner aus einer nur an den Kontakt/Berührungs-Flächen vorhandenen porösen oder dichten Edelmetall-Oberflächenschicht aus Au oder ei nem Pt-Metall oder einer Legierung aus mindestens zweien dieser Metalle und einer zwischen Träger und Edelmetall-Oberflächenschicht vorliegenden zusammenhängenden Schicht aus elektrisch leitfähigem, gleichzeitig als Oxydationsschutz und als Diffusionssperre wirkenden $Cr_2O_3$ besteht.

Die Aufgabe wird ferner dadurch gelöst, dass zur Herstellung eines Stromübertragungselements zunächst aus der oxyddispersionsgehärteten Nickel- oder Nickel/Chrom-Legierung durch thermo-mechanische Behandlung und/oder mechanische Bearbeitung aus geeignetem feinkörnigen Vormaterial/Halbzeug in Form von Blech, Band oder Draht ein Träger gefertigt und unter Schutzgas oder Vakuum bei 1250 bis 1320 °C während einer 1/2 h bis 3 h zu einer warmfesten grobkörnigen Struktur rekristallisiert wird und im Falle der Verwendung von Nickel elektrochemisch mit einer Zwischenschicht aus Cr von 0,5 bis 10 $\mu$m Dicke versehen, zwecks Bildung einer zusammenhängenden Schicht aus elektrisch leitfähigem $Cr_2O_3$ in Sauerstoffatmosphäre bei 800 bis 900 °C während 1 bis 24 h geglüht wird, und dass der auf diese Weise beschichtete Träger an den Kontakt/Berührungs-Flächen zu den Elektroden und zur Trennplatte mit einer Edelmetall-Oberflächenschicht versehen wird.

## Weg zur Ausführung der Erfindung

Die Erfindung wird anhand der nachfolgenden, durch Figuren näher erläuterten Ausführungsbeispiele beschrieben.

Dabei zeigt:

Fig. 1 einen schematischen Schnitt/Aufriss durch eine Trennplatte mit beidseitig angeordneten Stromkollektoren in Wendel- und Wellenform und zugehöri gen benachbarten parallelen, ebenen Brennstoffzellen,

Fig. 2 einen schematischen Schnitt/Aufriss durch eine Trennplatte mit beidseitig angeordneten Stromkollektoren in Kontaktfingerform und zugehörigen benachbarten parallelen, ebenen Brennstoffzellen.

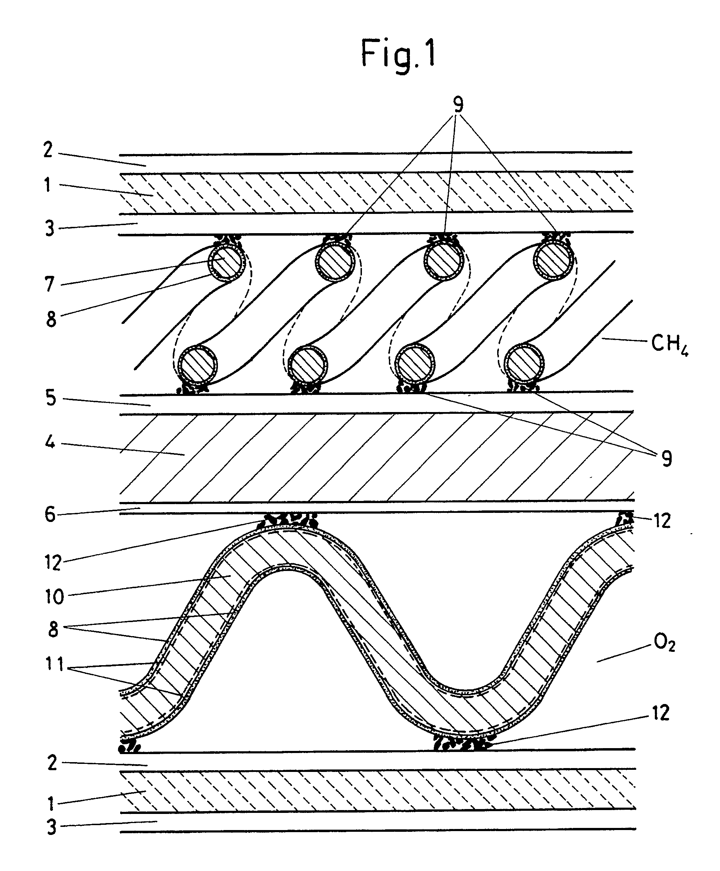

In Fig. 1 ist ein schematischer Schnitt/Aufriss durch eine Trennplatte mit beidseitig angeordneten Stromkollektoren in Wendel- und Wellenform und zugehörigen benachbarten parallelen, ebenen Brennstoffzellen dargestellt. Die Hochtemperatur-Brennstoffzelle an sich besteht aus dem keramischen Feststoffelektrolyten 1 aus dotiertem, stabilisiertem $ZrO_2$ und der porösen positiven Sauerstoffelektrode 2 aus La/Mn-Perowskit sowie der porösen negativen Brennstoffelektrode 3 aus $Ni/ZrO_2$-Cermet. 4 ist eine gasdichte, elektrisch leitende Trennplatte aus einer warmfesten Legierung. Die Trennplatte 4 trägt auf der Brennstoffseite eine Nickelplattierung 5 als eine einen guten elektrischen Kontakt gewährleistende Oberflächenschicht, insbesondere für gleitende Berührung mit dem brennstoffseitigen Stromkollektor. 6 stellt eine vergleichsweise dünne Edelmetallplattierung auf der Sauerstoffseite der Trennplatte 4 dar. Diese besteht vorzugsweise aus Au oder einem Pt-Metall oder einer Legierung dieser Edelmetalle. 7 ist der Trä ger (Grundkörper) des Stromkollektors auf der Brennstoffseite, welcher im vorliegenden Fall die Form eines quer zusammengedrückten schiefwinkligen Wendels hat. Der Träger 7 besteht aus oxyddispersionsgehärtetem Nickel (TD-Ni) oder aus einer oxyddispersiongehärteten Ni/Cr-Legierung (TD-NiCr). 8 stellt eine zusammenhängende Schicht aus elektrisch leitfähigem $Cr_2O_3$ dar. 9 ist eine poröse Edelmetall-Oberflächenschicht an den Kontakt/Berührungs-Flächen des Stromkollektors der Brennstoffseite. 10 stellt den Träger (Grundkörper) des Stromkollektors auf der Sauerstoffseite dar. Im vorliegenden Fall hat er die Form eines sinusartig gewellten Bandes. Der Träger 10 besteht aus einer oxyddispersionsgehärteten Ni/Cr-Legierung (TD-NiCr). 11 ist eine zwischen dem Träger 10 und der aus Cr₂O₃ bestehenden Schicht vorhandene Zwischenschicht aus Cr. 12 stellt eine poröse Edelmetall-Oberflächenschicht an den Kontakt/Berührungs-Flächen des Stromkollektors dar. Das Symbol CH₄ steht allgemein für den vom gasförmigen Brennstoff durchfluteten, das Symbol O₂ für den vom gasförmigen Sauerstoffträger (Luft) durchfluteten Raum der Brennstoffzelle. Die Dicken sind gegenüber den Längenabmessungen stark übertrieben gezeichnet.

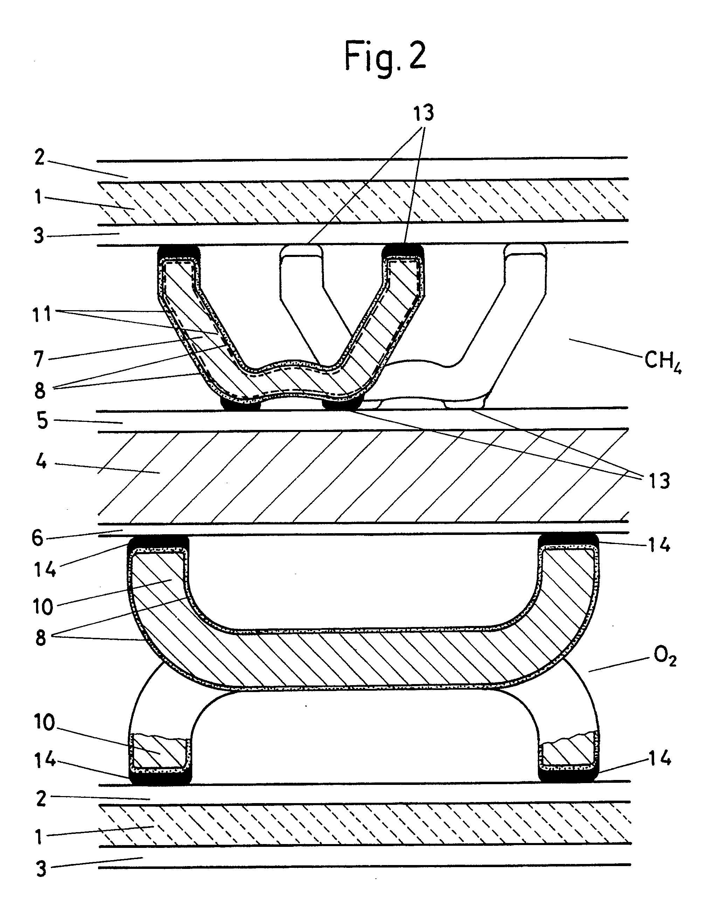

Fig. 2 bezieht sich auf einen schematischen Schnitt/Aufriss durch eine Trennplatte mit beidseitig angeordneten Stromkollektoren in Kontaktfingerform und zugehörigen benachbarten parallelen, ebenen Brennstoffzellen. Die Bezugszeichen 1, 2, 3 der eigentlichen Brennstoffzelle entsprechen genau der Fig. 1. Die mit einer Nickelplattierung 5 auf der Brennstoffseite und mit einer Edelmetallplattierung 6 auf der Sauerstoffseite versehene elektrisch leitende Trennplatte 4 entspricht ebenfalls im Prinzip derjenigen von Fig. 1. Der Träger (Grundkörper) 7 des Stromkollektors auf der Brennstoffseite hat im vorliegenden Fall die Form von kammartigen, gegenseitig versetzten Kontaktfingern. Der Träger 7 weist eine Zwischenschicht 11 aus Cr sowie eine darüberligende zusammenhängende Schicht 8 aus elektrisch leitfähigem Cr₂O₃ auf. An den Kontakt/Berührungs-Flächen zur Brennstoffelektrode 3 (Kopfseite) einerseits und an denjenigen zur Trennplatte 4 (Basisseite) andererseits ist der Träger 7 mit einer zusammenhängenden, mehr oder weniger dichten Edelmetall-Oberflächenschicht 13 versehen. Der Träger (Grundkörper) 10 des Stromkollektors auf der Sauerstoffseite hat hier die Form eines abwechslungsweise nach der Seite der Elektrode und der Seite der Trennplatte abgekanteten Bleches mit entsprechenden vorstehenden kontaktfingerähnlichen Lappen. Der Träger 10 ist im Bereich der Enden dieser Lappen an den Kontakt/Berührungs-Flächen zur Sauerstoffelektrode 3 und zur Trennplatte 4 mit einer zusammenhängenden, mehr oder weniger dichten Edelmetall-Oberflächenschicht 14 versehen.

Ausführungsbeispiel 1:

Siehe Fig. 1!
Eine Anordnung von Stromübertragungselementen wurde aus folgenden Einzelteilen aufgebaut:
Stromkollektor, Brennstoffseite
Trennplatte
Stromkollektor, Sauerstoffseite

Die eigentliche Brennstoffzelle bestand aus einer flachen, ebenen Platte mit dem zentral angeordneten Feststoffelektrolyten 1 aus stabilisiertem ZrO₂, einer aufgesinterten porösen Sauerstoffelektrode 2 aus La/Mn-Perowskit und einer ebenfalls aufgesinterten porösen Brennstoffelektrode 3 aus einem Ni/ZrO₂-Cermet.

Der Träger (Grundkörper) 7 des brennstoffseitigen Stromkollektors bestand aus einem vergleichsweise lockeren Wendel aus Draht, dessen Windungen zur Längsachse leicht schief standen. Die Abmessungen waren die folgenden:
Drahtdurchmesser = 0,25 mm
Windungsdurchmesser = 1,2 mm
Steigung = 0,8 mm
Schiefstellung der Windung gegenüber Normalebene ca. 35°

Als Werkstoff für den Träger 7 des brennstoffseitigen Stromkollektors wurde eine oxyddispersionsgehärtete Ni/Cr-Legierung mit dem Handelsnamen TD-NiCr gewählt. Die Zusammensetzung war die folgende:
Cr = 20 Gew.-%
ThO₂ = 2,0 Gew.-%
Ni = Rest

Das Ausgangsmaterial bestand aus einem stranggepressten feinkörnigen Stab, der zunächst durch Warmwalzen bei ca. 1000°C auf einen geringeren Durchmesser und sukzessive durch Ziehen mit Zwischenglühungen auf den Enddurchmesser von 0,25 mm gebracht wurde. Der Draht wurde zu einer Schraubenlinie gewunden und der zylindrische Wendel um ca. 35° flach gedrückt, so dass ein elliptischer Querschnitt entstand. Die grosse Achse mass 1,4 mm, die kleine Achse 0,9 mm. Der Wendel wurde hierauf bei 1280°C während 1 h isotherm rekristallisiert. Die flacheren, diametral gegenüberliegenden Seiten dieses Wendels mit schief zur Längsachse liegenden Windungen wurden nun nach dem Pastenverfahren mit einer vergleichsweise lockeren Schicht aus Pt belegt. Zu diesem Zweck wurde die Paste im Anlieferungszustand mit organischem Lösungsmittel verdünnt. Die Partikelgrösse des verwendeten Pt-Pulvers betrug max. 5 μm. Die verdünnte Paste wurde zunächst bei 350°C getrocknet und anschliessend unter O₂-Atmosphäre durch Glühen bei 1000°C während 24 h in den metallischen Zustand übergeführt. Dabei wurde eine zusammenhängende Schicht 8 aus elektrisch leitendem Cr₂O₃ und eine aus einem lockeren Gerüst von zusammengesinterten Partikeln bestehende poröse Edelmetall-Oberflächenschicht 9 gebildet. Die Schicht 8 hatte eine Dicke von ca. 4 μm, die Oberflächenschicht 9 eine solche von ca. 30 μm.

Die gasdichte, elektrisch leitende Trennplatte 4 bestand aus einem 0,30 mm dicken blanken Blech aus einer oxyddispersionsgehärteten Nickelbasislegierung mit der Handelsbezeichnung MA 754 (INCO) und der nachfolgenden Zusammensetzung:

Cr = 20 Gew.-%
Al = 0,3 Gew.-%
Ti = 0,5 Gew.-%
Fe = 1 Gew.-%
C = 0,05 Gew.-%
$Y_2O_3$ = 0,6 Gew.-%
Ni = Rest

Dieser Trägerwerstoff der Trennplatte 4 wurde auf der Brennstoffseite elektrochemisch mit einer 15 μm dicken Nickelplattierung 5 versehen. Auf der Sauerstoffseite wurde in gleicher Weise galvanisch eine Edelmetallplattierung 6 in Form einer Au-Schicht von 4 μm Dicke aufgebracht.

Der Träger (Grundkörper) 10 des sauerstoffseitigen Stromkollektors bestand aus einem sinusförmig gewellten Band, das die folgenden Abmessungen hatte:

Dicke = 0,12 mm
Breite = 2,2 mm
Wellenlänge = 3,6 mm
Amplitude = 1,2 mm

Als Werkstoff wurde eine oxyddispersionsgehärtete Nickellegierung mit dem Handelsnamen TD-Ni mit der nachfolgenden Zusammensetzung gewählt:

$ThO_2$ = 2,0 Gew.-%
Ni = Rest

Der Träger 10 des Stromkollektors wurde aus feinkörnigem, durch Warm- und Kaltwalzen mit Zwischenglühungen hergestellten Blech gestanzt, in Wellenform gepresst und bei 1300 °C während 1 h isotherm rekristallisiert. Daraus resultierte die hervorragende Warmfestigkeit gegenüber Biegung quer zur Längsrichtung. Nun wurde der Träger 10 zunächst beidseitig galvanisch mit einer Cr-Zwischenschicht 11 von 3 μm Dicke versehen. Durch Glühung des Ganzen in Luft bei 800 °C während 24 h wurde der grösste Teil dieser Zwischenschicht 11 in die zusammenhängende Schicht 8 aus elektrisch leitfähigem $Cr_2O_3$ übergeführt. Die auf diese Weise erzeugte, durch ihre grüne Farbe leicht erkennbare Schicht 8 hatte eine Dicke von ca. 3 μm und war völlig dicht. Nun wurden die Scheitel des wellenförmigen sauerstoffseitigen Stromkollektors nach dem Pastenverfahren in gleicher Weise wie beim brennstoffseitigen Stromkollektor an den Kontakt/Berührungs-Flächen mit einer porösen Edelmetall-Oberflächenschicht 12 versehen. Letztere hatte nach erfolgter Wärmebehandlung in Luft eine Dicke von ca. 40 μm. Die poröse Edelmetall-Oberflächenschicht 12 war in der $Cr_2O_3$-Schicht 8 fest verankert.

Es soll hier speziell auf die hervorragende Bedeutung der elektrisch leitenden $Cr_2O_3$-Schicht 8 im Zusammenhang mit der erfindungsgemässen Schichtfolge hingewiesen werden. Die Schicht 8 hat unter anderem im wesentlichen 3 Funktionen:
- Schutz des Trägers 10 aus dispersionsgehärteter Hochtemperaturlegierung (TD-Ni) vor vorzeitiger weiterer Oxydation.
- Grossflächige niederohmige Stromübertragung zwischen Träger 10 und Edelmetall-Oberflächenschicht 12.
- Diffusionssperre gegen Abwanderung des Edelmetalls in den Träger 10 (Verarmung der Oberflächenschicht 12) und gegen Wanderung der Trägermetalle (Ni; Cr) in das Edelmetall (Verdünnung und Zerstörung der Oberflächen schicht 12 durch Herabsetzung der Nichtoxydierbarkeit).

Unter einem Strom von ca. 40 mA pro Berührungspunkt wurde in der Schicht 8 ein Spannungsabfall von ca. 2 mV gemessen. Dies entsprach einem Widerstand unterhalb des Pt-Beschichtungspunktes von ca. 50 mΩ. Am Berührungspunkt zwischen der ca. 1,2 mm² Fläche aufweisenden Oberflächenschicht 12 und einer grossflächigen Pt-Sonde als Gegenelektrode wurde ein Spannungsabfall von ca. 6 mV gemessen, was einem Uebergangswiderstand (Kontaktwiederstand) von ca. 150 mΩ entsprach. Diese Spannungsabfälle machten nur wenige Prozent der gesamten Zellenspannung einer Brennstoffzelle aus.

Ausführugnsbeispiel 2:

Siehe Fig. 2!
Die Anordnung von Stromübertragungselementen umfasste die folgenden Einzelteile:
Stromkollektor, Brennstoffseite
Trennplatte
Stromkollektor, Sauerstoffseite

Die Brennstoffzelle an sich bestand aus den gleichen Elementen 1; 2 und 3 wie in Beispiel 1.

Der Träger (Grundkörper) 7 des brennstoffseitigen Stromkollektors bestand aus einer Reihe von kammartigen, gegenseitig versetzten Kontaktfingern von annähernd U-förmigem Längsprofil. Die Abmessungen waren die folgenden:
Totale gebogene Länge: ca. 5,5 mm
Totale Höhe: ca. 1,8 mm
Breite: ca. 1,5 mm
Dicke: ca. 0,15 mm

Der laterale Zwischenraum zwischen zwei Kontaktfingern betrug 2 mm, der longitudinale 2,5 mm. Das verbleibende laterale Spiel zwischen benachbarten, sich kreuzenden Kontaktfingern von zwei aufeinanderfolgenden Kämmen betrug demnach 0,25 mm.

Aus einem 0,15 mm dicken Blech wurde ein Anzahl von Stromkollektoren gemäss Träger 7 (Fig. 2, oben) gestanzt und in die angegebene doppelkammartige Form gepresst.

Als Werkstoff für den Träger 7 des brennstoffseitigen Stromkollektors wurde eine oxyddispersionsgehärtete Ni-Legierung mit dem Handelsnamen TD-Ni gewählt. Die Zusammensetzung war wie folgt:

ThO$_2$ = 2,0 Gew.-%

Ni = Rest

Das Ausgangsmaterial bestand aus einem feinkörnigen, durch Walzen und Zwischenglühen hergestellten Blech, das nach dem Stanzen und Pressen in die gewünschte Form gebracht und bei 1300 °C während 1 h isotherm rekristallisiert wurde. Der Träger 7 wurde beidseitig elektrochemisch mit einer Zwischenschicht 11 aus Cr von 1 μm Dicke versehen. Dann wurde der beschichtete Träger während 10 h bei 800 °C in Luft geglüht, wobei praktisch das gesamte Cr dieser Zwischenschicht 11 in die zusammenhängende Schicht 8 aus elektrisch leitfähigem Cr$_2$O$_3$ übergeführt wurde. Die Schicht 8 hatte eine Dicke von ca. 1 μm und war völlig dicht. Die Köpfe wie die leicht gewölbten Basisflächen des doppelkammförmigen brennstoffseitigen Stromkollektors wurden nun mit einer aus mehreren Lagen bestehenden zusammenhängenden, mehr oder weniger dichten Edelmetall-Oberflächenschicht 13 an den Kontakt/Berührungs-Flächen auf elektrochemische Weise versehen. Die gesamte Dicke dieser aus Pd bestehenden Oberflä chenschicht 13 betrug ca. 20 μm. Die Edelmetall-Oberflächenschicht 13 haftete fest auf der Cr$_2$O$_3$-Schicht 8.

Die gasdichte, elektrisch leitende Trennplatte 4 bestand aus einem 0,35 mm dicken blanken Blech aus einer oxyddispersionsgehärteten Ni/Cr-Legierung mit dem Handelsnamen TD-NiCr und der nachfolgenden Zusammensetzung:

Cr = 20 Gew.-%

ThO$_2$ = 2,0 Gew.-%

Ni = Rest

Der Trägerwerkstoff der Trennplatte 4 wurde auf der Brennstoffseite elektrochemisch mit einer 30 μm dicken Nickelplattierung 5 und auf der Sauerstoffseite mit einer Edelmetallplattierung 6 in Form einer Pd-Schicht von 6 μm Dicke versehen.

Der Träger 10 des sauerstoffseitigen Stromkollektors bestand aus einem abwechslungsweise nach der Seite der Elektrode 2 und der Seite der Trennplatte 4 rechtwinklig abgekanteten Blech mit entsprechenden vorstehenden kontaktfingerähnlichen Lappen. Die Abmessungen waren wie folgt:

Totale gebogene Länge: ca. 8 mm

Totale Höhe: ca. 3 mm

Breite: ca. 2,0 mm

Dicke: ca. 0,25 mm

Der laterale Zwischenraum zwischen zwei kontakfingerartigen Lappen betrug 2,6 mm, der longitudinale 5 mm. Das verbleibende laterale Spiel zwischen benachbarten, ineineinandergeschachtelten Lappen betrug demnach 0,3 mm.

Die Stromkollektoren (Träger 10 gemäss Fig. 2, unten) wurden aus einem 0,25 mm dicken Blech gestanzt und in die gewünschte Form gepresst.

Als Werkstoff für den Träger 10 des sauerstoffseitigen Stromkollektors wurde eine oxyddispersionsgehärtete Ni/Cr-Legierung mit dem Handelsnamen TD-NiCr gewählt. Die Zusammensetzung war wie folgt:

Cr = 20 Gew.-%

ThO$_2$ = 2,0 Gew.-%

Ni = Rest

Als Ausgangsmaterial wurde ein Blech mit feinkörniger Kristallstruktur verwendet, das durch Stanzen und Pressen in die besagte Form gebracht wurde. Dann wurde das Ganze bei 1280 °C während 1 h isotherm rekristallisiert. Nun wurde der Stromkollektor während 10 h bei 800 °C einer oxydierenden Atmosphäre unterworfen, wobei eine zusammenhängende Schicht 8 aus elektrisch leitfähigem Cr$_2$O$_3$ von ca. 2 μm Dicke gebildet wurde. Die Köpfe der kontaktfingerartigen Lappen des sauerstoffseitigen Stromkollektors wurden an den Kontakt/Berührungs-Flächen mit einer zusammenhängenden, mehr oder weniger dichten Edelmetall-Oberflächenschicht 14 unter Anwendung des elektrochemischen Verfahrens versehen. Dazu wurde Pd verwendet. Die Oberflächenschicht 13 hatte eine Dicke von ca. 25 μm und haftete vollkommen auf der Schicht 8 aus elektrisch leitfähigem Cr$_2$O$_3$.

Unter einem Strom von ca. 80 mA pro Berührungspunkt wurde in der Schicht 8 ein Spannungsabfall von ca. 3,6 mV gemessen. Dies entsprach einem Widerstand unterhalb des Pd-Beschichtungspunktes von ca. 45 mΩ. Am Berührungspunkt zwischen der ca. 0,6 mm$^2$ Fläche aufweisenden Oberflächenschicht 14 und einer grossflächigen Pt-Sonde als Gegenelek trode wurde ein Spannungsabfall von ca. 8 mV gemessen, was einem Uebergangswiderstand (Kontaktwiderstand) von ca. 100 mΩ entsprach. Diese Spannungsabfälle machten nur wenige Prozente der gesamten Zellenspannung einer Brennstoffzelle aus.

Die Erfindung ist nicht auf die Ausführungsbeispiele beschränkt.

Die Stromübertragungselemente zur Stromleitung zwischen benachbarten flachen, ebenen, stapelförmig angeordneten keramischen Hochtemperatur-Brennstoffzellen mit Feststoffelektrolyt 1 auf der Basis von dotiertem, stabilisiertem Zirkonoxyd, wobei jeweils die Sauerstoffelektrode 2 der einen Brennstoffzelle mit der Brennstoffelektrode 3 der nächstfolgenden Brennstoffzelle elektrisch leitend verbunden und der zwischen den Elektroden 2; 3 liegende Zwischenraum durch eine gasdichte, elektrisch leitende Trennplatte 4 in zwei, die unterschiedlichen gasförmigen Medien Brennstoff (CH$_4$) und Sauerstoffträger (O$_2$) führenden Räume unterteilt ist, bestehen allgemein aus einer aus einer oxyddispersionsgehärteten Nickel/Chrom-Legierung bestehenden, auf der Brennstoffseite eine Nickelplattierung 5 und auf der Sauerstoffseite eine Edelmetallplattierung 6 tragenden Trennplatte 4, ausserdem aus sowohl auf der Brennstoffseite wie auf der Sauerstoffseite angeordneten Stromkollektoren, wobei jeder Stromkollektor seinerseits aus einem die geometrische Form bestimmenden Träger 7; 10 aus einer elektrisch leitenden oxyddispersionsgehärteten Nickel- oder Nickel/Chrom-Legierung mit einem mindestens in den Oberflächenzonen hohen Cr-Gehalt, wobei als Dispersoid $ThO_2$ in einem Gehalt von bis 2 Gew.-% vorhanden ist, ferner aus einer nur an den Kontakt/Berührungs-Flächen vorhandenen porösen oder dichten Edelmetall-Oberflächenschicht 9; 12; 13; 14 aus Au oder einem Pt-Metall oder einer Legierung aus mindestens zweien dieser Metalle und einer zwischen Träger 7; 10 und Edelmetall-Oberflächenschicht 9; 12; 13; 14 vorliegenden zusammenhängenden Schicht 8 aus elektrisch leitfähigem, gleichzeitig als Oxydationsschutz und als Diffusionssperre wirkenden $Cr_2O_3$ besteht.

In einer ersten Variante ist die Edelmetall-Oberflächenschicht 13; 14 an den Kontakt/Berührungs-Flächen vollkommen zusammenhängend und dicht in einer Dicke von 5 bis 100 $\mu$m und die darunterliegende Schicht 8 aus $Cr_2O_3$ in einer Dicke von 1 bis 20 $\mu$m vorhanden.

In einer zweiten Variante ist die Edelmetall-Oberflächenschicht 9; 12 an den Kontakt/Berührungs-Flächen teilweise zusammenhängend und porös in einer Dicke von 5 bis 150 $\mu$m und die darunterliegende Schicht 8 aus $Cr_2O_3$ in einer Dicke von 1 bis 20 $\mu$m vorhanden.

Ein Stromübertragungselement ist ferner als Trennplatte 4 oder als Stromkollektor ausgebildet, wobei letzterer die Form eines Kontaktfingers oder eines gewellten Bandes oder Drahtes oder eines Drahtwendels oder eines Metallgewebes oder eines Vlieses hat und lediglich die den Elektroden 2; 3 und/oder der Trennplatte 4 am nächsten liegenden Stellen und Erhebungen mit einer Edelmetall-Oberflächenschicht 9; 12; 13; 14 versehen sind.

Das Verfahren zur Herstellung eines Stromübertragungselementes wird durchgeführt, indem zunächst aus der oxyddispersionsgehärteten Nickel- oder Nickel/Chrom-Legierung durch thermo-mechanische Behandlung und/oder mechanische Bearbeitung aus geeignetem feinkörnigen Vormaterial/Halbzeug in Form von Blech, Band oder Draht ein Träger 7; 10 gefertigt und unter Schutzgas oder Vakuum bei 1250 bis 1320 °C während einer 1/2 h bis 3 h zu einer warmfesten grobkörnigen Struktur rekristallisiert wird und im Falle der Verwendung von Nickel elektrochemisch mit einer Zwischenschicht 11 aus Cr von 0,5 bis 10 $\mu$m Dicke versehen, zwecks Bildung einer zusammenhängenden Schicht 8 aus elektrisch leitfähigem $Cr_2O_3$ in Sauerstoffatmosphäre bei 800 bis 900 °C während 1 bis 24 h geglüht wird, und dass der auf diese Weise beschichtete Träger 7; 10 an den Kontakt/Berührungs-Flächen zu den Elektroden 2; 3 und zur Trennplatte 4 mit einer Edelmetall-Oberflächenschicht 9; 12; 13; 14 versehen wird.

In einer ersten Art wird das Verfahren durchgeführt, indem zum Aufbringen einer porösen Edelmetall-Oberflächenschicht 9; 12 der Träger 7; 10 an den Kontakt/Berührungs-Flächen durch Bepinseln, Bestreichen, Abrollen eines getränkten Filzes oder teilweises Eintauchen mit einer Paste oder Suspension von Edelmetallpulver in Binde- und Lösungsmittel oberflächlich beschichtet und das Ganze getrocknet und einem Sinterprozess bei 0,7 - 0,8 der absoluten Schmelztemperatur des Edelmetalls in inerter Atmosphäre oder Vakuum unterworfen und anschliessend bei 800 bis 1100 °C in oxydierender Atmosphäre während mindestens 24 h geglüht wird.

In einer zweiten Art wird das Verfahren durchgeführt, indem zum Aufbringen einer zusammenhängenden, mehr oder weniger dichten Edelmetall-Oberflächenschicht 13; 14 der Träger 7; 10 an den Kontakt/Berührungs-Flächen elektrochemisch oberflächlich beschichtet und das Ganze getrocknet und bei 800 bis 1100 °C in oxydierender Atmosphäre während mindestens 24 h geglüht wird.

Ein wesentlicher Vorteil der vorliegenden Stromübertragungselemente zur Stromleitung zwischen benachbarten Brennstoffzellen liegt darin, dass sie praktisch ohne wesentliche Aenderung oder Anpassung sowohl auf der Sauerstoffseite als auch auf der Brennstoffseite der eigentlichen elektrochemischen Zelle eingesetzt werden können, also grundsätzlich universell verwendbar sind.

## Ansprüche

1. Stromübertragungselemente zur Stromleitung zwischen benachbarten flachen, ebenen, stapelförmig angeordneten keramischen Hochtemperatur-Brennstoffzellen mit Feststoffelektrolyt (1) auf der Basis von dotiertem, stabilisiertem Zirkonoxyd, wobei jeweils die Sauerstoffelektrode (2) der einen Brennstoffzelle mit der Brennstoffelektrode (3) der nächstfolgenden Brennstoffzelle elektrisch leitend verbunden und der zwischen den Elektroden (2; 3) liegende Zwischenraum durch eine gasdichte, elektrisch leitende Trennplatte (4) in zwei, die unterschiedlichen gasförmigen Medien Brennstoff ($CH_4$) und Sauerstoffträger ($O_2$) führenden Räume unterteilt ist, dadurch gekennzeichnet, dass eine aus einer oxyddispersionsgehärteten Nickel/Chrom-Legierung bestehende, auf der Brennstoffseite eine Nickelplattierung (5) und auf der Sauerstoffseite eine Edelmetallplattierung (6) tragende Trennplatte (4) vorgesehen ist, dass ferner sowohl auf der Brennstoffseite wie auf der Sauerstoffseite Stromkollektoren vorgesehen sind, wobei jeder Stromkollektor aus einem die geometrische Form bestimmenden Träger (7; 10) aus einer elektrisch leitenden oxyddispersionsgehärteten Nickel- oder Nickel/Chrom-Legierung mit einem mindestens in den Oberflächenzonen hohen Cr-Gehalt, wobei als Dispersoid $ThO_2$ in einem Gehalt von bis 2 Gew.-% vorhanden ist, ferner aus einer nur an den Kontakt/Berührungs-Flächen vorhandenen porösen oder dichten Edelmetall-Oberflächenschicht (9; 12; 13; 14) aus Au oder einem Pt-Metall oder einer Legierung aus mindestens zweien dieser Metalle und einer zwischen Träger (7; 10) und Edelmetall-Oberflächenschicht (9; 12; 13; 14) vorliegenden zusammenhängenden Schicht (8) aus elektrisch leitfähigem, gleichzeitig als Oxydationsschutz und als Diffusionssperre wirkenden $Cr_2O_3$ besteht.

2. Stromübertragungselement nach Anspruch 1, dadurch gekennzeichnet, dass die Edelmetall-Oberflächenschicht (13; 14) an den Kontakt/Berührungs-Flächen vollkommen zusammenhängend und dicht in einer Dicke von 5 bis 100 $\mu$m und die darunterliegende Schicht (8) aus $Cr_2O_3$ in einer Dicke von 1 bis 20 $\mu$m vorliegt.

3. Stromübertragungselement nach Anspruch 1, dadurch gekennzeichnet, dass die Edelmetall-Oberflächenschicht (9; 12) an den Kontakt/Berührungs-Flächen teilweise zusammenhängend und porös in einer Dicke von 5 bis 150 $\mu$m und die darunterliegende Schicht (8) aus $Cr_2O_3$ in einer Dicke von 1 bis 20 $\mu$m vorliegt.

4. Stromübertragungselement nach Anspruch 1, dadurch gekennzeichnet, dass es als Trennplatte (4) ausgebildet ist oder dass es als Stromkollektor ausgebildet ist und die Form eines Kontaktfingers oder eines gewellten Bandes oder Drahtes oder eines Drahtwendels oder eines Metallgewebes oder eines Vlieses hat und dass lediglich die den Elektroden (2; 3) und/oder der Trennplatte (4) am nächsten liegenden Stellen und Erhebungen mit einer Edelmetall-Oberflächenschicht (9; 12; 13; 14) versehen sind.

5. Verfahren zur Herstellung eines Stromübertragungselementes nach Anspruch 1, dadurch gekennzeichnet, dass zunächst aus der oxyddispersionsgehärteten Nickel-oder Nickel/Chrom-Legierung durch thermo-mechanische Behandlung und/oder mechanische Bearbeitung aus geeignetem feinkörnigen Vormaterial/Halbzeug in Form von Blech, Band oder Draht ein Träger (7; 10) gefertigt und unter Schutzgas oder Vakuum bei 1250 bis 1320 °C während einer 1/2 h bis 3 h zu einer warmfesten grobkörnigen Struktur rekristallisiert wird und im Falle der Verwendung von Nickel elektrochemisch mit einer Zwischenschicht (11) aus Cr von 0,5 bis 10 $\mu$m Dicke versehen, zwecks Bildung einer zusammenhängenden Schicht (8) aus

elektrisch leitfähigem $Cr_2O_3$ in Sauerstoffatmosphäre bei 800 bis 900 °C während 1 bis 24 h geglüht wird, und dass der auf diese Weise beschichtete Träger (7; 10) an den Kontakt/Berührungs-Flächen zu den Elektroden (2; 3) und zur Trennplatte (4) mit einer Edelmetall-Oberflächenschicht (9; 12; 13; 14) versehen wird.

6. Verfahren nach Anspruch 5, dadurch gekennzeichnet, dass zum Aufbringen einer porösen Edelmetall-Oberflächenschicht (9; 12) der Träger (7; 10) an den Kontakt/Berührungs-Flächen durch Bepinseln, Bestreichen, Abrollen eines getränkten Filzes oder teilweises Eintauchen mit einer Paste oder Suspension von Edelmetallpulver in Binde- und Lösungsmittel oberflächlich beschichtet und das Ganze getrocknet und einem Sinterprozess bei 0,7 - 0,8 der absoluten Schmelztemperatur des Edelmetalls in inerter Atmosphäre oder Vakuum unterworfen und anschliessend bei 800 bis 1100 °C in oxydierender Atmosphäre während mindestens 24 h geglüht wird.

7. Verfahren nach Anspruch 5, dadurch gekennzeichnet, dass zum Aufbringen einer zusammenhängenden, mehr oder weniger dichten Edelmetall-Oberflächenschicht (13; 14) der Träger (7; 10) an den Kontakt/Berührungs-Flächen elektrochemisch oberflächlich beschichtet und das Ganze getrocknet und bei 800 bis 1100 °C in oxydierender Atmosphäre während mindestens 24 h geglüht wird.

# Fig.1

# Fig. 2

Europäisches
Patentamt

EUROPÄISCHER
RECHERCHENBERICHT

Nummer der Anmeldung

EP 90 11 9441

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | WO-A-8 606 762  (MICHAEL HSU)<br>– – – | | H 01 M<br>8/02<br>H 01 M 8/24 |
| A | US-A-3 516 865  (C.S. TEDMON)<br>– – – | | |
| A | US-A-3 300 344  (D.T. BRAY et al.)<br>– – – | | |
| A | EP-A-0 338 823  (TOA NENRYO KOGYO K.K.)<br>* Seite 8, Zeilen 28-38; Tabelle 1,2; Seite 7, Zeilen 4-8; Seite 6, Zeilen 41-45 *<br>– – – – – | 5 | |

**RECHERCHIERTE SACHGEBIETE (Int. Cl.5)**

H 01 M

Der vorliegende Recherchenbericht wurde für alle Patentansprüche erstellt

| Recherchenort | Abschlußdatum der Recherche | Prüfer |
|---|---|---|
| Den Haag | 21 Januar 91 | D'HONDT J.W. |